# EUROPEAN PATENT SPECIFICATION

(11) **EP 0 869 514 B1**
(45) Date of publication and mention of the grant of the patent: **09.11.2005**
(21) Application number: 96112559.8
(22) Date of filing: 02.08.1996
(51) Int. Cl.: H01B 3/12, C04B 35/499

(54) **A method for manufacturing a dielectric ceramic composition, dielectric ceramic and multilayer high frequency device**
Verfahren zur Herstellung einer dielektrischen keramischen Zusammensetzung, dielektrische keramische Zusammensetzung und mehrschichtige Hochfrequenzvorrichtung
Méthode de préparation d'une composition céramique diélectrique, compositions céramique diélectrique et dispositif à haute fréquence multicouche

(43) Date of publication of application: 07.10.1998
(73) Proprietor: MATSUSHITA ELECTRIC INDUSTRIAL CO., LTD, Kadoma-shi, Osaka 571-0000 (JP)
(72) Inventor: Nishimoto, Keiki, Takatsuki-shi, Osaka 569 (JP); Kagata, Hiroshi, Neyagawa-shi, Osaka 572 (JP); Kato, Junichi, Osaka-shi,Osaka 558 (JP); Inoue, Tatsuya, Takatsuki-shi, Osaka 569 (JP)
(74) Representative: Kador & Partner

(56) References cited:
- EP-A- 0 534 801
- EP-A- 0 664 276
- EP-A- 0 671 370
- WO-A-84/02521
- DATABASE WPI Section Ch, Week 7926 Derwent Publications Ltd., London, GB; Class A81, AN 79-47912B XP002024133 & JP-A-54 061 699 (SUWA SEIKOSHA KK) , 18 May 1979
- DATABASE WPI Section Ch, Week 7834 Derwent Publications Ltd., London, GB; Class L03, AN 78-61490A XP002024134 & JP-A-53 083 100 (SUWA SEIKOSHA KK) , 22 July 1978

## Description

This invention relates to dielectric ceramic and multilayer high frequency devices used for various filters and resonators using high frequency.

Recently, communication systems using electromagnetic waves in the microwave range, such as automobile phones, portable telephones, satellite broadcasting systems or the like have been developed so that miniaturization of their terminal apparatus have been required. In order to miniaturize the terminal apparatus, each part of apparatus needs to be miniaturized. In such apparatus, the dielectric ceramic is placed in a frequency stabilizing device of various filters and oscillators. When the resonant mode is the same, the size of these resonant devices is inversely proportional to the square root of the dielectric constant (εᵣ) of the dielectric materials to be used. Consequently, in order to make miniature resonant devices, materials having a high dielectric constant are needed. Other required properties of the dielectric ceramic include: having a low loss in a microwave range, in other words, having a high Q value; and having a small temperature coefficient at a resonant frequency (τᵣ). As a material having a high dielectric constant, a (Pb, Ca) ZrO₃ system is disclosed in Japanese Laid-Open Patent No. (Tokkai-Hei) 4-65021. This system has a high dielectric constant (εᵣ) of more than 100, a high Q value of approximately 800 at 2-4 GHz and a small temperature coefficient at a resonant frequency.

Meanwhile, attempts have been made to miniaturize resonance devices and to improve the function by making a multilayer structure of conductor and dielectric ceramic. Since a conductor to be used in such a high-frequency range as microwave is required to have a high conductivity, Cu, Au, Ag or an alloy of them need to be used. In the case of making the dielectric ceramic multilayer structure, dielectric ceramic is required to be burned at the same time when the conductive metal is burned. The heat of the sintering operation acts on the conductive metal as well as the ceramic, so that the sintering conditions must be mild enough that the metal does not melt or oxidize. In other words, the dielectric ceramic is required to be densely sintered at temperatures below the melting points of the conductive metals to be used (the melting point of Cu is 1083°C, that of Au is 1063°C, that of Ag is 961°C). Furthermore, if the Cu is used for the electrode, the dielectric ceramic is required to be burnt at low oxygen partial pressure. As a microwave dielectric ceramic that can be sintered at low temperature, a Bi₂O₃-CaO-Nb₂O₅ system is disclosed in Japanese Laid-Open Patent No. (Tokkai-Hei) 5-225826.

Although the Bi₂O₃-CaO-Nb₂O₅ system ceramic can be sintered at a low temperature around 1000°C, Bi₂O₃ of the main component evaporates during burning. Thus, the dielectric property is unstable with respect to the burning temperature. In general, when the resonant device is further miniaturized, the Q value drops. Therefore, suitable materials having a high Q value are still needed.

EP-A1-0 671 370 provides a dielectric ceramic composition which is attained by sintering composition comprising a first component from 40 to 98 wt% and a second component from 2 to 60 wt% whereby the first component is represented by the formula Ca{(Mg_{1/3}Nb_{2/3})₁₋ₓTiₓ}O₃ where 0 ≤ x ≤ 0.50 and the second component includes at least one element from the group consisting of SiO₂ and B₂O₃.

The object of the present invention is to solve the above-mentioned problems and to provide the dielectric ceramic that is sinterable at lower temperatures, stable in composition, and has a high Q value. Another object of the present invention is to provide the method of manufacturing the dielectric ceramic and also provide a multilayer high frequency device using the dielectric ceramic.

In order to accomplish these and other objects and advantages, the dielectric ceramic composition of the present invention provides the following components: the first component comprising calcium oxide, magnesium oxide, niobium oxide and titanium oxide, and expressed by the Formula: Ca{(Mg_{1/3}Nb_{2/3})₁₋ₓTiₓ}O₃ (wherein X is more than 0 not more than 0.50) within the range of not less than 40 parts by weight nor more than 98 parts by weight; the second component comprising at least one selected from SiO₂ and B₂O₃ within the range of not less than 2 parts by weight nor more than 60 parts by weight; and at least one oxide selected from the group consisting of MgO, NiO, CuO, MnO₂ and WO₃ within the range of not less than 0.1 parts by weight nor more than 10 parts by weight.

It is preferable in the dielectric ceramic composition of the present invention that the dielectric constant (εᵣ) ranges from 10 to 50.

It is preferable in the dielectric ceramic composition of the present invention that the Qf product is not less than 1000GHz nor more than 30000GHz.

It is preferable in the dielectric ceramic composition of the present invention that the temperature coefficient at a resonant frequency is not less than -50 ppm/°C nor more than +50 ppm/°C.

According to the method of manufacturing the dielectric ceramic of the present invention, the dielectric ceramic is provided by sintering the dielectric ceramic composition. The above-mentioned dielectric ceramic composition comprises: the first component comprising calcium oxide, magnesium oxide, niobium oxide and titanium oxide and expressed by the Formula: Ca{(Mg_{1/3}Nb_{2/3})₁₋ₓ Tiₓ}O₃ (wherein X is more than 0 and not more than 0.50) within the range of not less than 40 parts by weight nor more than 98 parts by weight; the second component comprising at least one selected from SiO₂ and B₂O₃ within the range of not less than 2 parts by weight nor more than 60 parts by weight; and at least one oxide selected from the group consisting of MgO, NiO, CuO, MnO₂ and WO₃ within the range of not less than 0.1 parts by weight nor more than 10 parts by weight. This method comprises the procedure of preheat treating a mixture of the second component and additive before sintering.

It is preferable in the method of the present invention that the temperature for the preheat treatment ranges from 500°C to 900°C.

It is preferable in the method of the present invention that the preheat treatment includes the procedures of melting at a temperature within the range of 1000°C to 1200°C and quenching after melting.

It is preferable in the method of the present invention that the sintering temperature ranges from 800°C to 1200°C.

It is preferable in the method of the present invention that the first component is calcined at the temperature of 1000°C-1300°C and then ground fine.

It is preferable in the method of the present invention that the preheat treatment includes the procedures of: melting the second component at a temperature of 1000°C-1200°C; quenching it; and then grinding it fine.

According to the multilayer high frequency device of the present invention comprising conductor and dielectric; all or some of the conductor is composed by Cu, Cu alloy, Au, Au alloy, Ag, and Ag alloy; all or some part of the dielectric is composed of the dielectric ceramic composition comprising: the first component comprising calcium oxide, magnesium oxide, niobium oxide and titanium oxide and expressed by the Formula: Ca{(Mg_{1/3}Nb_{2/3})₁₋ₓTiₓ}O₃ (wherein X is more than 0 and not more than 0.50) within the range of not less than 40 parts by weight nor more than 98 parts by weight; the second component comprising at least one selected from SiO₂ and B₂ O₃ within the range of not less than 2 parts by weight nor more than 60 parts by weight; and at least one oxide selected from the group consisting of MgO, NiO, CuO, MnO₂ and WO₃ within the range of not less than 0.1 parts by weight nor more than 10 parts by weight.

It is preferable in the multilayer high frequency device that dielectric constant (εᵣ) ranges from 10 to 50.

It is preferable in the multilayer high frequency device that the Qf product is not less than 1000 GHz nor more than 30000 GHz.

According to the dielectric ceramic composition of the present invention in which the first component comprising calcium oxide, magnesium oxide, niobium oxide and titanium oxide and expressed by the Formula: Ca{(Mg_{1/3}Nb_{2/3})₁₋ₓTiₓ}O₃ (wherein X is more than 0 not more than 0.50) is present within the range of not less than 40 parts by weight nor more than 98 parts by weight; the second component comprising at least one selected from SiO₂ and B₂O₃ is present within the range of not less than 2 parts by weight nor more than 60 parts by weight; and at least one oxide selected from the group consisting of MgO, NiO, CuO, MnO₂ and WO₃ is present within the range of not less than 0.1 parts by weight nor more than 10 parts by weight: there can be provided the dielectric ceramic composition capable of being sintered at a low temperature, being stable in composition and having a higher Q value. In other words, since Ca{(Mg_{1/3}Nb_{2/3})₁₋ₓTiₓ}O₃ having an excellent microwave dielectric property is used as the first component, and furthermore, since glass components which improve sintering are contained as the second component, there can be provided the dielectric ceramic sinterable at temperatures around 1000°C and having a high dielectric constant, a high Q value and a small temperature coefficient at a resonant frequency. Moreover, since Bi₂O₃ is not contained as the first component, the dielectric ceramic is stable in composition and excellent in the stability of the dielectric property with respect to the burning temperature.

The method for manufacturing the dielectric ceramic composition of the present invention permits manufacturing the dielectric ceramics efficiently and reasonably.

According to the multilayer high frequency device of the present invention, the above-mentioned dielectric ceramic composition is used for the dielectric layer and Cu, Au, Ag, or alloys of them are used for the conductor. As a result, a miniature and high performanced high frequency device can be provided.
Fig. 1 is a perspective view of the dielectric resonator of Example 4 of the present invention.
Fig. 2 is a cross sectional view taken on line I-I of Fig.1.
Fig. 3 is a cross sectional view taken on line II-II of Fig.1.
Fig. 4A is a cross sectional view taken on line III-III of Fig. 2, Fig. 4B is a cross sectional view taken on line IV-IV of Fig. 2 and Fig. 4C is a cross sectional view taken on line V-V of Fig. 2.

This invention will be explained in detail with reference to the following examples.

### Example 1

In example 1 is described a preferred embodiment to illustrate the dielectric ceramics composition of the present invention. The powder used for the first component is synthesized as follows. As initial materials, compounds of chemical purity (chemical purity hereinafter represents not less than 99wt.% purity), such as CaCO₃, MgO, Nb₂O₅ and TiO₂ were used. The purity of the materials was checked, and then the materials were weighed so as to make composition expressed by Ca{(Mg_{1/3}Nb_{2/3})₁₋ₓTiₓ}O₃ wherein X is value shown in Tables. Moreover, the powder was blended with zirconia balls and pure water by means of a ball mill for 17 hours. The milled slurry was dried and calcined in the melting pot made of alumina at temperatures of 1000°C-1300°C for 2 hours. The calcined product was milled by the use of the above-mentioned ball mill for 17 hours and dried so that the powder of the first component was made.

The powder used for the second component is synthesized as follows. As initial materials, compounds of chemical purity such as SiO₂, B₂O₃, Al₂O₃, ZrO₂, BaCO₃, SrCO₃, CaCO₃, Li₂O, ZnO, and PbO were used. The purity of these materials was checked and then the materials were weighed so as to make compositions shown respectively in Table 1. Moreover, the powder was blended with ethanol as solvent by using a ball mill and then dried. The blended powder was melted in a melting pot at the temperatures of 1000°C-1200°C and then quenched. After being milled, the blended powder was milled in the same manner as blending and then dried so that the powder of the second component was made. After milling, the particle size of the powder was less than 50µm. The composition of the synthesized second component is shown in Table 1.

**Table 1**

| Sample NO. | Composition of second component (parts by weight) | | | | | | | | | |
|---|---|---|---|---|---|---|---|---|---|---|
| | SiO₂ | B₂O₃ | Al₂O₃ | ZrO₂ | BaO | SrO | CaO | Li₂O | ZnO | PbO |
| A | 50 | | | | 20 | | | 10 | | 20 |
| B | | 60 | | | | 10 | | | 10 | 20 |
| C | 50 | 30 | 20 | | | | | | | |
| D | 45 | 27 | 20 | 3 | 5 | | | | | |
| E | 45 | 26 | 20 | 3 | | | 5 | 1 | | |
| F | 45 | 27 | 20 | 3 | 5 | | | | | |
| G | 55 | 20 | 15 | 4 | | 6 | | | | |

As the additives, the powder of high chemical purity such as MgO, NiO, CuO, MnO₂,WO₃ was weighed so as to make the same composition as that shown in Tables 2 and 3. The additives were wet-milled in the ball mill with the powders of the first component and the second component and then dried. The powder was mixed with 6 wt.% of polyvinyl alcohol solution (of 5 wt.% in concentration) as a binder and granulated by sieving through 32 mesh screen. The granulated powder was press-molded into a disk of 13 mm in diameter and approximately 5 mm in thickness at a molding pressure of 100 MPa. After the molded product was heated at the temperature of 600°C for 3 hours to remove binders, the molded product was placed in a closed magnesia magnetic vessel, retained at various temperatures within the range of 800°C-1200°C for 2 hours and burned. The microwave dielectric property of the sintered product, which was burnt at the temperature showing the maximum density, was measured. The dielectric constant of the sample was calculated by means of the resonant frequency of TE₀₁₁ mode and sample state. At that time the sample was picked up and held by a parallel conductive plate, The resonant frequency and the Q value were measured by putting samples on the supporting base in the cavity by the dielectric resonator method of TE_{01δ} mode. As a result, the resonance frequency was 4-8 GHz. The resonant frequencies at temperatures of -25°C, 20°C, and 85°C were measured respectively and then the temperature coefficients (τf) were calculated by the least square method. The results are shown in the Table 2 and 3.

**Table 2**

| Sample No | Composition | | | | | | Sintering temperature | Dielectric property | | |
|---|---|---|---|---|---|---|---|---|---|---|
| | first component | | second Component | | Additives | | °C | εr | Qf product | τf |
| | X | parts by wt. | Mark | parts by wt. | element | parts by wt. | | | GHz | ppm/°C |
| 1# | 0.0 | 80 | D | 20 | | 0 | 900 | 14 | 4500 | -41 |
| 2# | 0.0 | 80 | D | 20 | CuO | 2 | 875 | 14 | 4800 | -40 |
| 3# | 0.3 | 80 | D | 20 | | 0 | 900 | 22 | 3800 | -3 |
| 4 | 0.3 | 80 | D | 20 | CuO | 0.1 | 875 | 22 | 4000 | -3 |
| 5 | 0.3 | 80 | D | 20 | MgO | 2 | 875 | 21 | 4300 | -2 |
| 6 | 0.3 | 80 | D | 20 | NiO | 2 | 875 | 21 | 4300 | -4 |
| 7 | 0.3 | 80 | D | 20 | CuO | 2 | 875 | 22 | 4500 | -4 |
| 8 | 0.3 | 80 | D | 20 | MnO₂ | 2 | 875 | 22 | 4200 | -2 |
| 9 | 0.3 | 80 | D | 20 | WO₃ | 2 | 875 | 21 | 4100 | -4 |
| 10 | 0.3 | 80 | D | 20 | CuO | 5 | 875 | 21 | 4400 | -7 |
| 11 | 0.3 | 80 | D | 20 | CuO | 10 | 850 | 21 | 3900 | -10 |
| 12# | 0.3 | 80 | D | 20 | CuO | 15 | 825 | 20 | 1800 | -13 |
| 13 | 0.3 | 80 | D | 20 | MgO | 0.5 | 875 | 21 | 4300 | -4 |
| | | | | | NiO | 0.5 | | | | |
| | | | | | MnO₂ | 0.5 | | | | |
| | | | | | WO₃ | 0.5 | | | | |
| 14# | 0.5 | 80 | D | 20 | | 0 | 900 | 29 | 2400 | +48 |
| 15 | 0.5 | 80 | D | 20 | MgO | 2 | 875 | 28 | 2700 | +43 |
| 16# | 0.3 | 98 | D | 2 | | 0 | 1150 | 40 | 18000 | -10 |
| 17 | 0.3 | 98 | D | 2 | CuO | 5 | 1100 | 39 | 19000 | -10 |
| 18# | 0.3 | 70 | D | 30 | | 0 | 875 | 19 | 2900 | -8 |
| 19 | 0.3 | 70 | D | 30 | NiO | 2 | 850 | 19 | 3200 | -9 |
| 20# | 0.3 | 40 | D | 60 | | 0 | 850 | 14 | 1200 | -7 |
| 21 | 0.3 | 40 | D | 60 | CuO | 2 | 825 | 14 | 1500 | -7 |

| | | | | | | | | | | |
|---|---|---|---|---|---|---|---|---|---|---|
| # = comparative example | | | | | | | | | | |

**Table 3**

| Sample No | Composition | | | | | | Sintering temperature | Dielectric property | | |
|---|---|---|---|---|---|---|---|---|---|---|
| | first component | | second Component | | Additives | | °C | εr | Qf product | τf |
| | X | parts by wt. | Mark | parts by wt. | element | parts by wt. | | | GHz | ppm/°C |
| 22# | 0.3 | 80 | A | 20 | | 0 | 1075 | 23 | 4100 | +2 |
| 23 | 0.3 | 80 | A | 20 | MgO | 2 | 1025 | 22 | 4600 | +1 |
| | | | | | NiO | 2 | | | | |
| 24# | 0.3 | 80 | B | 20 | | 0 | 875 | 20 | 2700 | +4 |
| 25 | 0.3 | 80 | B | 20 | MgO | 2 | 850 | 20 | 2900 | +3 |
| | | | | | MnO₂ | 2 | | | | |
| 26# | 0.3 | 80 | C | 20 | | 0 | 950 | 23 | 3900 | -2 |
| 27 | 0.3 | 80 | C | 20 | CuO | 2 | 900 | 22 | 4100 | -2 |
| | | | | | WO₃ | 2 | | | | |
| 28# | 0.3 | 80 | E | 20 | | 0 | 875 | 22 | 3700 | -5 |
| 29 | 0.3 | 80 | E | 20 | MnO₂ | 2 | 850 | 22 | 3800 | -5 |
| 30 | 0.3 | 80 | E | 20 | CuO | 2 | 800 | 21 | 4100 | -4 |
| | | | | | WO₃ | 2 | | | | |
| 31# | 0.3 | 80 | F | 20 | | 0 | 900 | 22 | 3800 | -3 |
| 32 | 0.3 | 80 | F | 20 | NiO | 2 | 875 | 22 | 4100 | -4 |
| 33 | 0.3 | 80 | F | 20 | CuO | 2 | 850 | 21 | 4300 | -4 |
| | | | | | NiO | 2 | | | | |
| 34# | 0.3 | 80 | G | 20 | | 0 | 950 | 24 | 4000 | -2 |
| 35 | 0.3 | 80 | G | 20 | MgO | 2 | 900 | 23 | 4300 | -2 |
| | | | | | WO₃ | 2 | | | | |
| 36# | 0.3 | 65 | G | 35 | | 0 | 875 | 19 | 3300 | -5 |
| 37 | 0.3 | 65 | G | 35 | MgO | 2 | 850 | 19 | 3500 | -5 |
| 38# | 0.45 | 65 | G | 35 | | 0 | 875 | 23 | 2800 | +41 |
| 39 | 0.45 | 65 | G | 35 | NiO | 1 | 850 | 22 | 3000 | +38 |
| | | | | | MnO₂ | 1 | | | | |

| | | | | | | | | | | |
|---|---|---|---|---|---|---|---|---|---|---|
| # = comparative example | | | | | | | | | | |

The reason for limiting the composition of the first component and second component will be explained hereinafter. It is not preferable that X in the Formula: Ca{(Mg_{1/3}Nb_{2/3})₁₋ₓ Tiₓ}O₃ be more than 0.5, since the temperature coefficient at a resonant frequency will be in more than +50. If the amount of second component is less than 2 parts by weight, the burning temperature will be above 1200°C. Consequently, the objective of the present invention is not achieved. Moreover, it is not preferable that the amount of accessory component be more than 60 parts by weight, since the Qf product will become less than 1000 GHz. Consequently, by limiting the composition of the first component and the second component, the dielectric ceramic composition of the present invention could be sintered at low temperatures around 1000°C.

Furthermore, as described in Claims 1, there could be provided the dielectric ceramic composition having a high dielectric constant of around 25, a high Qf product of above 1000 GHz and a small temperature coefficient at a resonant frequency with the range of -50 to +50 ppm/°C.

As is apparent from Table 2 and Table 3, by adding at least one selected from the group consisting of MgO, NiO, CuO, MnO₂ and WO₃ in the amount of 0.1 parts by weight to 10 parts by weight, the dielectric ceramic composition had a low burning temperature and high Q value. In other words, a dielectric ceramic having a good microwave dielectric property could be obtained.

As shown in sample No. 12, if CuO, as a additive, was added at more than 10 parts by weight, the burning temperature could be lowered as compared with the case in which no additives was added, but at the same time Q value was also lowered. Therefore, the case of adding more than 10 parts by weight is not as desirable.

### Example 2

The method for making the first component and second component and examining the properties were conducted in the same manner as Example 1.

As additives, the powder of high chemical purity such as MgO, NiO, CuO, MnO₂, WO₃ were weighed so as to make the composition shown in Table 4 and 5. The additives were retained and heat treated together with the powder of second component for 2 hours at temperature of 500-900°C. After grinding fine, the additives were milled in a ball mill for 17 hours, dried and then mixed together with powder of the first component. The results were shown in Table 4 and Table 5.

**Table 4**

| Sample No | Composition | | | | | | Sintering temperature | Dielectric property | | |
|---|---|---|---|---|---|---|---|---|---|---|
| | first component | | second Component | | Additives | | °C | εr | Qf product | τf |
| | X | parts by wt. | Mark | parts by wt. | element | parts by wt. | | | GHz | ppm/°C |
| 40# | 0.3 | 80 | D | 20 | | 0 | 900 | 22 | 3800 | -3 |
| 41 | 0.3 | 80 | D | 20 | CuO | 0.1 | 875 | 22 | 4000 | -3 |
| 42 | 0.3 | 80 | D | 20 | MgO | 2 | 875 | 22 | 4400 | -3 |
| 43 | 0.3 | 80 | D | 20 | NiO | 2 | 875 | 22 | 4500 | -5 |
| 44 | 0.3 | 80 | D | 20 | CuO | 2 | 875 | 23 | 4700 | -4 |
| 45 | 0.3 | 80 | D | 20 | MnO₂ | 2 | 875 | 23 | 4300 | -2 |
| 46 | 0.3 | 80 | D | 20 | WO₃ | 2 | 850 | 22 | 4200 | -4 |
| 47 | 0.3 | 80 | D | 20 | CuO | 5 | 850 | 24 | 4600 | -6 |
| 48 | 0.3 | 80 | D | 20 | CuO | 10 | 825 | 25 | 4000 | -9 |
| 49# | 0.3 | 80 | D | 20 | CuO | 15 | 825 | 25 | 2200 | -15 |
| 50 | 0.3 | 80 | D | 20 | MgO | 0.5 | 850 | 24 | 4500 | -5 |
| | | | | | NiO | 0.5 | | | | |
| | | | | | MnO₂ | 0.5 | | | | |
| | | | | | WO₃ | 0.5 | | | | |
| 51# | 0.5 | 80 | D | 20 | | 0 | 900 | 29 | 2400 | +48 |
| 52 | 0.5 | 80 | D | 20 | MgO | 2 | 875 | 29 | 2900 | +42 |
| 53# | 0.3 | 98 | D | 2 | | 0 | 1150 | 40 | 18000 | -10 |
| 54 | 0.3 | 98 | D | 2 | CuO | 5 | 1100 | 41 | 22000 | -11 |
| 55# | 0.3 | 70 | D | 30 | | 0 | 875 | 19 | 2900 | -8 |
| 56 | 0.3 | 70 | D | 30 | NiO | 2 | 850 | 19 | 3400 | -10 |
| 57# | 0.3 | 40 | D | 60 | | 0 | 850 | 14 | 1200 | -7 |
| 58 | 0.3 | 40 | D | 60 | CuO | 2 | 825 | 15 | 1600 | -8 |

| | | | | | | | | | | |
|---|---|---|---|---|---|---|---|---|---|---|
| # = comaparative example | | | | | | | | | | |

**Table 5**

| Sample No | Composition | | | | | | Sintering temperature °C | Dielectric property | | |
|---|---|---|---|---|---|---|---|---|---|---|
| | first component | | second Component | | Additives | | | εr | Qf product GHz | τf ppm/°C |
| | X | wt.% | Mark | wt.% | element | wt.% | | | | |
| 59# | 0.3 | 80 | A | 20 | | 0 | 1075 | 23 | 4100 | +2 |
| 60 | 0.3 | 80 | A | 20 | MgO | 2 | 1025 | 22 | 4800 | +2 |
| | | | | | NiO | 2 | | | | |
| 61# | 0.3 | 80 | B | 20 | | 0 | 875 | 20 | 2700 | +4 |
| 62 | 0.3 | 80 | B | 20 | MgO | 2 | 825 | 21 | 3100 | +5 |
| | | | | | NiO | 2 | | | | |
| 63# | 0.3 | 80 | C | 20 | | 0 | 950 | 23 | 3900 | -2 |
| 64 | 0.3 | 80 | C | 20 | CuO | 2 | 900 | 24 | 4400 | -2 |
| | | | | | WO₃ | 2 | | | | |
| 65# | 0.3 | 80 | E | 20 | | 0 | 875 | 22 | 3700 | -5 |
| 66 | 0.3 | 80 | E | 20 | CuO | 2 | 825 | 23 | 4200 | -4 |
| | | | | | WO₃ | 2 | | | | |
| 67# | 0.3 | 80 | F | 20 | | 0 | 900 | 22 | 3800 | -3 |
| 68 | 0.3 | 80 | F | 20 | CuO | 2 | 850 | 23 | 4500 | -5 |
| | | | | | NiO | 2 | | | | |
| 69# | 0.3 | 80 | G | 20 | | 0 | 950 | 24 | 4000 | -2 |
| 70 | 0.3 | 80 | G | 20 | MgO | 2 | 900 | 25 | 4400 | -1 |
| | | | | | WO₃ | 2 | | | | |

| | | | | | | | | | | |
|---|---|---|---|---|---|---|---|---|---|---|
| # = comparative example | | | | | | | | | | |

As is apparent from Table 4 and Table 5, by heat treating at least one selected from the group consisting of MgO, NiO, CuO, MnO₂ and WO₃ at the rate of 0.1 parts by weight to 10 parts by weight together with second component at temperatures of 500-900°C in advance, the dielectric ceramic could be burnt at lower temperature and have a high Q value. Consequently, the dielectric ceramic having a good dielectric property and an excellent microwave property could be provided.

Moreover, the reason for limiting the composition of the first component and second component was same reason as Example 1. As is apparent from the sample No. 49, if CuO, as an additive, was added with more than 10 parts by weight, the burning temperature could be lowered as compared with the case when no additive were added. However, at the same time Q value was also lowered. Therefore, the case where the additives are added at 10 parts by weight or more is not as desirable.

### Example 3

The method of manufacturing the first component and second component, and examining the properties were conducted in the same manner as Example 1. As additives, the powder of high chemical purity, such as MgO, NiO, CuO, MnO₂, WO₃ as the additives were weighed so as to make the compositions shown in Table 6 and Table 7. The additives were melted together with the powder of the second component at the temperature of 1000°C-1200°C in the same manner as Example 1 and then quenched. Then the powder was ground fine, dried and blended together with the powder of the first component. The results were shown in the Table 6 and Table 7.

**Table 6**

| Sample No | Composition | | | | | | Sintering temperature | Dielectric property | | |
|---|---|---|---|---|---|---|---|---|---|---|
| | first component | | second Component | | Additives | | °C | εr | Qf product | τf |
| | X | wt.% | Mark | wt.% | element | wt.% | | | GHz | ppm/°C |
| 71# | 0.3 | 80 | D | 20 | | 0 | 900 | 22 | 3800 | -3 |
| 72 | 0.3 | 80 | D | 20 | CuO | 0.1 | 875 | 22 | 3900 | -3 |
| 73 | 0.3 | 80 | D | 20 | MgO | 2 | 875 | 23 | 4500 | -2 |
| 74 | 0.3 | 80 | D | 20 | NiO | 2 | 875 | 23 | 4500 | -5 |
| 75 | 0.3 | 80 | D | 20 | CuO | 2 | 875 | 23 | 4900 | -4 |
| 76 | 0.3 | 80 | D | 20 | MnO₂ | 2 | 875 | 23 | 4300 | -3 |
| 77 | 0.3 | 80 | D | 20 | WO₃ | 2 | 850 | 23 | 4300 | -4 |
| 78 | 0.3 | 80 | D | 20 | CuO | 5 | 850 | 24 | 4800 | -7 |
| 79 | 0.3 | 80 | D | 20 | CuO | 10 | 825 | 25 | 4200 | -9 |
| 80# | 0.3 | 80 | D | 20 | CuO | 15 | 825 | 26 | 2400 | -15 |
| 81 | 0.3 | 80 | D | 20 | MgO | 0.5 | 850 | 25 | 4600 | -6 |
| | | | | | NiO | 0.5 | | | | |
| | | | | | MnO₂ | 0.5 | | | | |
| | | | | | WO₃ | 0.5 | | | | |
| 82# | 0.5 | 80 | D | 20 | | 0 | 900 | 29 | 2400 | +48 |
| 83 | 0.5 | 80 | D | 20 | MgO | 0.2 | 875 | 30 | 3000 | +41 |
| 84# | 0.3 | 98 | D | 2 | | 0 | 1150 | 40 | 18000 | -10 |
| 85 | 0.3 | 98 | D | 2 | CuO | 5 | 1100 | 42 | 24000 | -12 |
| 86# | 0.3 | 70 | D | 30 | | 0 | 875 | 19 | 2900 | -8 |
| 87 | 0.3 | 70 | D | 30 | NiO | 2 | 850 | 20 | 3600 | -9 |
| 88# | 0.3 | 40 | D | 60 | | 0 | 850 | 14 | 1200 | -7 |
| 89 | 0.3 | 40 | D | 60 | CuO | 2 | 825 | 16 | 1800 | -8 |

| | | | | | | | | | | |
|---|---|---|---|---|---|---|---|---|---|---|
| # = comparative example | | | | | | | | | | |

**Table 7**

| Sample No | Composition | | | | | | Sintering temperature °C | Dielectric property | | |
|---|---|---|---|---|---|---|---|---|---|---|
| | first component | | second Component | | Additives | | | εr | Qf product GHz | τf ppm/°C |
| | X | wt.% | Mark | wt.% | element | wt.% | | | | |
| 90# | 0.3 | 80 | A | 20 | | 0 | 1075 | 23 | 4100 | +2 |
| 91 | 0.3 | 80 | A | 20 | MgO | 2 | 1025 | 24 | 4900 | +2 |
| | | | | | NiO | 2 | | | | |
| 92# | 0.3 | 80 | B | 20 | | 0 | 875 | 20 | 2700 | +4 |
| 93 | 0.3 | 80 | B | 20 | MgO | 2 | 825 | 23 | 3100 | +4 |
| | | | | | MnO₂ | 2 | | | | |
| 94# | 0.3 | 80 | C | 20 | | 0 | 950 | 23 | 3900 | -2 |
| 95 | 0.3 | 80 | C | 20 | CuO | 2 | 900 | 25 | 4500 | -2 |
| | | | | | WO₃ | 2 | | | | |
| 96# | 0.3 | 80 | E | 20 | | 0 | 875 | 22 | 3700 | -5 |
| 97 | 0.3 | 80 | E | 20 | CuO | 2 | 825 | 24 | 4400 | -5 |
| | | | | | WO₃ | 2 | | | | |
| 98# | 0.3 | 80 | F | 20 | | 0 | 900 | 22 | 3800 | -3 |
| 99 | 0.3 | 80 | F | 20 | CuO | 2 | 850 | 23 | 4700 | -3 |
| | | | | | NiO | 2 | | | | |
| 100# | 0.3 | 80 | G | 20 | | 0 | 950 | 24 | 4000 | -2 |
| 101 | 0.3 | 80 | G | 20 | MgO | 2 | 900 | 25 | 4600 | -2 |
| | | | | | WO₃ | 2 | | | | |

| | | | | | | | | | | |
|---|---|---|---|---|---|---|---|---|---|---|
| # = comparative example | | | | | | | | | | |

As is apparent from Table 6 and Table 7, by heat treating at least one selected from the group consisting of MgO, NiO, CuO, MnO₂ and WO₃ at the rate of 0.1 parts by weight to 10 parts by weight together with the second component, the dielectric ceramic could have lower sintering temperature and improve the Q value and have a high dielectric constant. Consequently, there could be provided the dielectric ceramic having good property and excellent microwave property.

Moreover, the reason for limiting the composition of the first component and second component was the same reason as Example 1. As is apparent from sample No. 80, if CuO, as an additive, was added at more than 10 parts by weight, the burning temperature could be lowered as compared with the case when no additive were added, but at the same time, the Q value was also lowered. Therefore, adding the additives in the amount of more than 10 parts by weight is not as desirable.

### Example 4

In Example 4 is described a preferred embodiment to illustrate the high frequency device of the present invention.

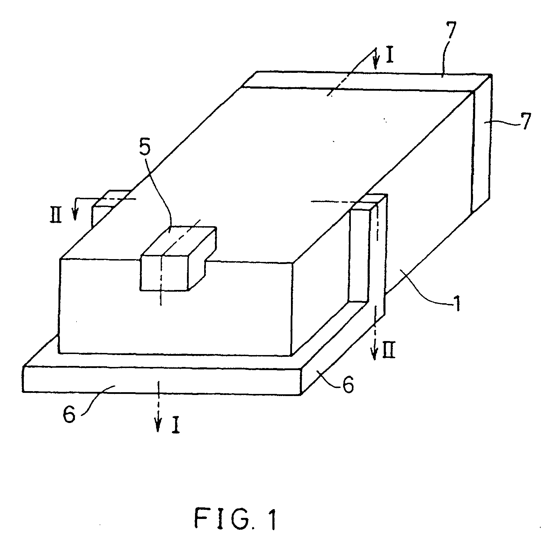

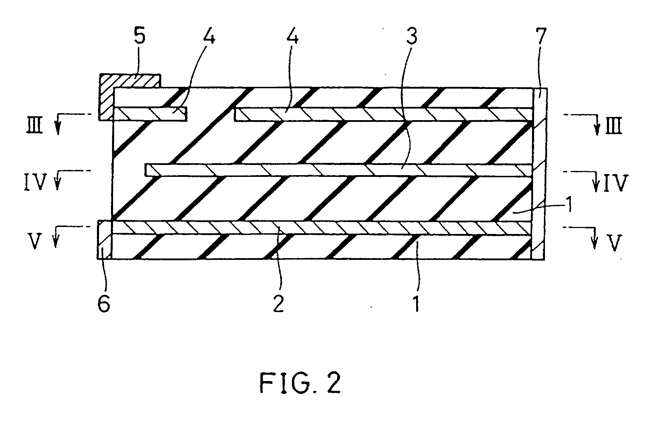

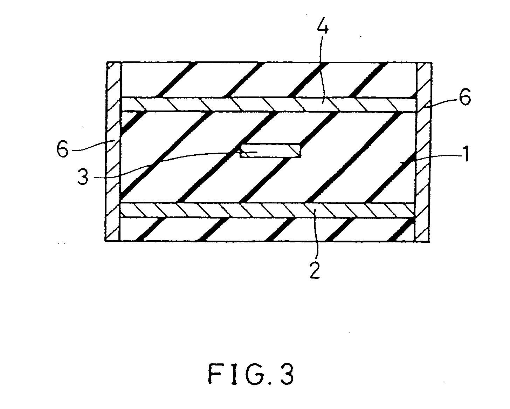

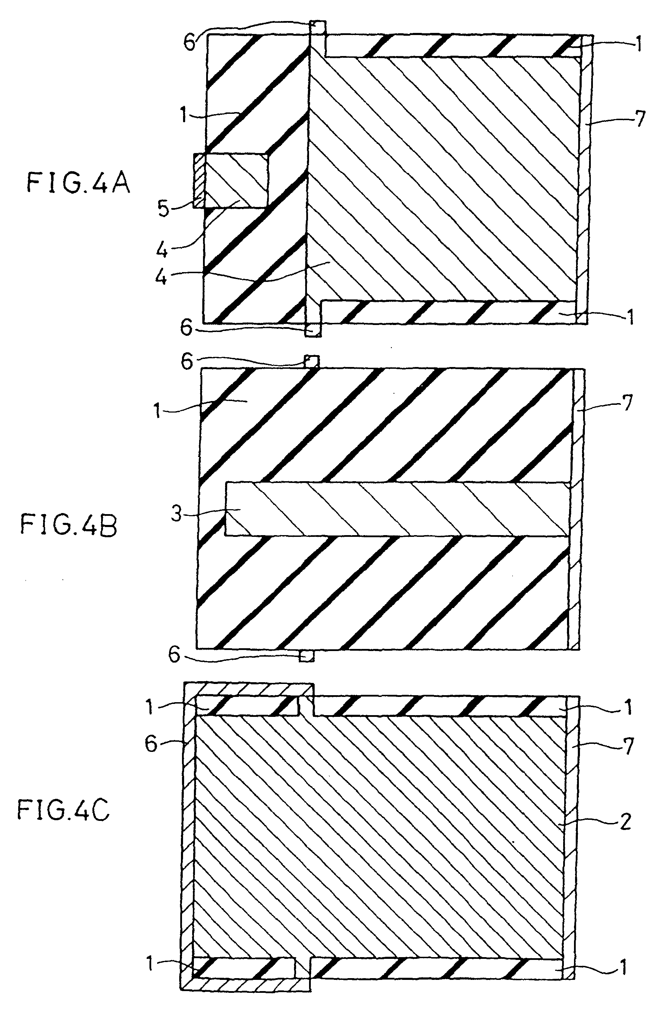

As a multilayer high frequency device, a dielectric resonator was made. The dielectric resonator has a structure in which a stripline conductor is covered with a dielectric layer and a shield conductor and a capacitor for binding are included. Fig.1 is a perspective view of the device. Fig. 2 is a cross sectional view taken on line I-I of Fig.1. Fig. 3 is a cross sectional view taken on line II-II of Fig. 1. Fig.4A is a cross sectional view taken on line III-III of Fig. 2. Fig.4B is a cross sectional view taken on line IV-IV of Fig. 2. Fig.4C is a cross sectional view taken on line V-V of Fig. 2. Herein, 1 shows a dielectric layer; 2, 3 and 4 show internal conductors; 5, 6,and 7 show external electrodes. Following is the method for manufacturing the high frequency device.

First, organic binder, solvent and plasticizer were added and mixed in the composition of sample No. 10 of Table 2. The mixed slurry was formed into a sheet by the doctor blade method. As a conductive metal, various metals shown in Table 8 were selected. The metals were mixed with vehicle to make into paste. In the case where the conductor was Cu, CuO paste was used.

**Table 8**

| conductive electrode | resonant frequency GHz | no-load Q |
|---|---|---|
| Cu | 2.04 | 180 |
| Ag | 2.01 | 180 |
| 99Ag-1Pt | 2.00 | 170 |
| Au | 2.02 | 175 |

Other sheets were made from the composition of sample No. 47 of Table 4 and that of sample No. 78 of Table 6 by the same method.

**Table 9**

| conductive electrode | resonant frequency GHz | no-load Q |
|---|---|---|
| Cu | 2.01 | 185 |
| Ag | 1.99 | 190 |
| 99Ag-1Pt | 1.99 | 175 |
| Au | 2.00 | 180 |

**Table 10**

| conductive electrode | resonant frequency GHz | no-load Q |
|---|---|---|
| Cu | 2.00 | 190 |
| Ag | 1.99 | 190 |
| 99Ag-1Pt | 1.98 | 180 |
| Au | 2.00 | 185 |

A plurality of sheets were layered, and then the conductive pattern 2 of Fig. 4 was screen printed thereon. A further plurality of sheets were layered thereon, and then the conductive pattern 3 was printed thereon. A further plurality of sheets were further layered thereon, and then the conductive pattern 4 was printed thereon. A further plurality of sheets were layered thereon, which were pressed by a heat pressing method. After cutting it into individual devices, the devices were heat treated in the air to flash the binder. In the case that CuO paste was used, the conductor was heat treated in H₂ for reducing to Cu and then burned in N₂. In the case that another conductor was used, the conductor was burned in the air. The burning temperature was 900°C.

The external electrodes 5, 6, and 7 were burned in the air, and Cu was burnt in N₂ so that a multilayer dielectric resonator was obtained.

After burning, the size of device was 8mm in length, 4.5mm in width, and 2.5mm in height. The conductor, a strip line, was 1mm wide and 7mm long.

Ten devices were made per each conductor and the average value was taken as the property. The resonant frequency and the Q value of the obtained resonator are shown in Table 8, 9 and 10.

As seen in in Table 8, 9 and 10, the resonant frequency of resonator were approximately 2.0 GHz and the Q values are high when any of Cu, Au, Ag and alloys of them were used, thus showing excellent properties. Since the dielectric constant of the conventional substrate materials was approximately 8, in order to obtain the resonator which has the same structure and same resonant frequency, the length of the strip line is required to be approximately 12mm. However, the dielectric constant of the dielectric of the present invention was from 21 to 24, so that the length of the strip line was 7mm. Consequently, the miniature device could be provided.

Moreover, by making the strip line in a curved or layered form, a smaller resonant device could be provided. In addition, by combining a plurality of resonators and capacitors, a band-pass filter could be provided.

Furthermore, other than the elements described above, any elements that have no harmful effect on the dielectric properties may be included.

As stated above, according to the dielectric ceramics of the present invention, wherein: the first component comprising calcium oxide, magnesium oxide, niobium oxide and titanium oxide and expressed by the Formula: Ca{(Mg_{1/3}Nb_{2/3})₁₋ₓTiₓ}O₃ (wherein X is more than 0 nor more than 0.50) is present within the range of not less than 40 parts by weight nor more than 98 parts by weight; the second component comprising at least one selected from SiO₂ and B₂O₃ is present within the range of not less than 2 parts by weight nor less than 60 parts by weight; and at least one oxide selected from the group consisting of MgO, NiO, CuO, MnO₂ and WO₃ is present within the range of not less than 0.1 parts by weight nor less than 10 parts by weight; there can be provided the dielectric ceramic compositions that can be sintered at a low temperature and are stable in composition and have a higher Q value. In other words, since Ca{(Mg_{1/3}Nb_{2/3})₁₋ₓTiₓ}O₃ having an excellent microwave dielectric property is used as the first component and glass components that improve the sintering are contained as the second component, the dielectric ceramic that can be sintered around 1000°C and have a high dielectric constant, a high Q value and a small temperature coefficient at a resonant frequency can be provided. Moreover, Bi₂O₃ is not included in the first components so that the dielectric ceramic is stable in composition and also in the dielectric property with respect to the burning temperature. Consequently, the use of the dielectric ceramic of the present invention permits miniaturizing and improving the function of high frequency devices such as filters and resonators.

According to the method for manufacturing the dielectric ceramic composition of the present invention, the dielectric ceramic composition can be effectively and reasonably manufactured. Moreover, according to the dielectric ceramic composition of the present invention, there can be provided the dielectric ceramic having a low burning temperature, high Q value, a high dielectric constant of around 25 and a small temperature coefficient at a resonant frequency (τᵣ). As a result, a multilayer resonant device in which Cu, Au or Ag are used for an internal conductor can be provided. The miniature and highly performance resonator could provide a miniature and high performance automobile phone or portable phone. Moreover, the dielectric ceramic of the present invention can be used for not only a resonant device but also a microwave circuit substrate or multilayer ceramic capacitor. Consequently, the dielectric ceramics of the present invention can be valuable for industrial purposes.

## Claims

1. A dielectric ceramic composition, wherein the first component comprising calcium oxide, magnesium oxide, niobium oxide and titanium oxide and expressed by the Formula: Ca{(Mg_{1/3}Nb_{2/3})₁₋ₓTiₓ}O₃ (wherein X is more than 0 not more than 0.50) is present within the range of not less than 40 parts by weight nor more than 98 parts by weight; the second component comprising at least one selected from SiO₂ and B₂O₃ is present within the range of not less than 2 parts by weight nor more than 60 parts by weight; and **characterized in that** at least one oxide selected from the group consisting of MgO, NiO, CuO, MnO₂ and WO₃ is added within the range of not less than 0.1 parts by weight nor more than 10 parts by weight.

2. The dielectric ceramic composition according to claim 1, wherein dielectric constant (εᵣ) ranges from 10 to 50.

3. The dielectric ceramic composition according to claim 1, wherein the Qf product is not less than 1000 GHz nor more than 30000 GHz.

4. A method for manufacturing the dielectric ceramic composition comprising of: the first component comprising calcium oxide, magnesium oxide, niobium oxide and titanium oxide and expressed by the Formula: Ca{(Mg_{1/3}Nb_{2/3})₁₋ₓTiₓ}O₃ (wherein X is more than 0 not more than 0.50) within the range of not less than 40 parts by weight nor more than 98 parts by weight; the second component comprising at least one selected from SiO₂ and B₂O₃ within the range of not less than 2 parts by weight nor more than 60 parts by weight; and **characterized in that** at least one oxide selected from the group consisting of MgO, NiO, CuO, MnO₂ and WO₃ is added within the range of not less than 0.1 parts by weight nor more than 10 parts by weight; and said method includes sintering of said composition and preheat treating a mixture of at least one selected from the second component and additive before said sintering process.

5. The method for manufacuring the dielectric ceramic composition according to claim 4, wherein the temperature for the preheat treatment ranges from 500°C to 900°C.

6. The method for manufacturing the dielectric ceramic composition according to claim 4, wherein the melting temperature of the preheat treatment is 1000°C-1200°C; and said heat treatment includes quenching after melted.

7. The method for manufacturing the dielectric ceramic composition according to claim 4, wherein the sintering temperature ranges from 800°C to 1200°C.

8. The method for manufacturing the dielectric ceramic composition according to claim 4, wherein the first component is calcined at the temperature of 1000°C-1300°C and then ground fine.

9. The method for manufacturing the the dielectric ceramic composition according to claim 4, wherein the preheat treatment comprises the steps of melting the second component at the temperature of 1000°C-1200°C, quenching them and grinding them fine.

10. A multilayer high frequency device comprising conductor and dielectric, wherein the conductor comprises Cu, Cu alloy, Au, Au alloy, Ag, and Ag alloy; and all or one part of the dielectric layer comprises: the first component comprising calcium oxide, magnesium oxide, niobium oxide and titanium oxide and expressed by the Formula: Ca{(Mg_{1/3}Nb_{2/3})₁₋ₓTiₓ}O₃ (wherein X is more than 0 not more than 0.50) within the range of not less than 40 parts by weight nor more than 98 parts by weight; the second component comprising at least one selected from SiO₂ and B₂O₃ within the range of not less than 2 parts by weight nor more than 60 parts by weight; and **characterized in that** at least one oxide selected from the group consisting of MgO, NiO, CuO, MnO₂ and WO₃ is added within the range of not less than 0.1 parts by weight nor more than 10 parts by weight.

11. The multilayer high frequency device according to claim 10, wherein dielectric constant (εᵣ) ranges from 10 to 50.

## Patentansprüche

1. Dielektrische Keramikzusammensetzung, wobei die erste Komponente, die Calciumoxid, Magnesiumoxid, Nioboxid und Titanoxid umfaßt und mit der Formel Ca{(Mg_{1/3}Nb_{2/3})₁₋ₓTiₓ}O₃ angegeben wird (wobei x mehr als 0 und nicht mehr als 0,50 beträgt) im Bereich von weniger als 40 Gew.-Teilen und nicht mehr als 98 Gew.-Teilen vorliegt; die zweite Komponente, die mindestens eine Verbindung umfaßt, die aus SiO₂ und B₂O₃ ausgewählt ist, im Bereich von nicht weniger als 2 Gew.-Teilen und nicht mehr als 60 Gew.-Teilen vorliegt; und die **dadurch gekennzeichnet ist, daß** mindestens ein Oxid, ausgewählt aus der Gruppe von MgO, NiO, CuO, MnO₂ und WO₃, im Bereich von nicht weniger als 0,1 Gew.-Teil und nicht mehr als 10 Gew.-Teilen zugesetzt wird.

2. Dielektrische Keramikzusammensetzung nach Anspruch 1, wobei die Dielektrizitätskonstante (εᵣ) im Bereich von 10 bis 50 liegt.

3. Dielektrische Keramikzusammensetzung nach Anspruch 1, wobei das Produkt Qf nicht weniger als 1000 GHz und nicht mehr als 30000 GHz beträgt.

4. Verfahren zur Herstellung einer dielektrischen Keramikzusammensetzung, bestehend aus: der ersten Komponente, die Calciumoxid, Magnesiumoxid, Nioboxid und Titanoxid umfaßt und mit der Formel Ca{(Mg_{1/3}Nb_{2/3})₁₋ₓTiₓ}O₃ angegeben wird (wobei x mehr als 0 und nicht mehr als 0,50 beträgt), in einem Bereich von nicht weniger als 40 Gew.-Teilen und nicht mehr als 98 Gew.-Teilen; der zweiten Komponente, die mindestens eine Verbindung umfaßt, die aus SiO₂ und B₂O₃ ausgewählt ist, im Bereich von nicht weniger als 2 Gew.-Teilen und nicht mehr als 60 Gew.-Teilen; und **dadurch gekennzeichnet, daß** mindestens ein Oxid, ausgewählt aus der Gruppe von MgO, NiO, CuO, MnO₂ und WO₃, im Bereich von nicht weniger als 0,1 Gew.-Teil und nicht mehr als 10 Gew.-Teilen zugesetzt wird; und daß das Verfahren das Sintern der Zusammensetzung und eine Vorwärmbehandlung eines Gemischs von mindestens einer Verbindung, die aus der zweiten Komponente ausgewählt ist, und einem Zusatz vor dem Sinterverfahren einschließt.

5. Verfahren zur Herstellung einer dielektrischen Keramikzusammensetzung nach Anspruch 4, wobei die Temperatur für die Vorwärmbehandlung im Bereich von 500 bis 900°C liegt.

6. Verfahren zur Herstellung einer dielektrischen Keramikzusammensetzung nach Anspruch 4, wobei die Schmelztemperatur der Vorwärmbehandlung 1000 bis 1200°C beträgt und die Wärmebehandlung das Abschrecken einschließt, nach dem diese geschmolzen ist.

7. Verfahren zur Herstellung einer dielektrischen Keramikzusammensetzung nach Anspruch 4, wobei die Sintertemperatur im Bereich von 800 bis 1200°C liegt.

8. Verfahren zur Herstellung einer dielektrischen Keramikzusammensetzung nach Anspruch 4, wobei die erste Komponente bei einer Temperatur von 1000 bis 1300°C kalziniert und danach fein gemahlen wird.

9. Verfahren zur Herstellung einer dielektrischen Keramikzusammensetzung nach Anspruch 4, wobei die Vorwärmbehandlung die Schritte umfaßt: Schmelzen der zweiten Komponente bei einer Temperatur von 1000 bis 1200°C, deren Abschrecken und deren feines Mahlen.

10. Mehrschichtige Hochfrequenzvorrichtung, umfassend einen Leiter und ein Dielektrikum, wobei der Leiter Cu, eine Cu-Legierung, Au, eine Au-Legierung, Ag und eine Ag-Legierung umfaßt, und alle Teile oder ein Teil der dielektrischen Schicht umfassen: die erste Komponente, die Calciumoxid, Magnesiumoxid, Nioboxid und Titanoxid umfaßt und mit der Formel
Ca{(Mg_{1/3}Nb_{2/3})₁₋ₓTiₓ}O₃ angegeben wird (wobei x mehr als 0 und nicht mehr als 0,50 beträgt), in einem Bereich von nicht weniger als 40 Gew.-Teilen und nicht mehr als 98 Gew.-Teilen; die zweite Komponente, die mindestens eine Verbindung umfaßt, die aus SiO₂ und B₂O₃ ausgewählt ist, im Bereich von nicht weniger als 2 Gew.-Teilen und nicht mehr als 60 Gew.-Teilen; und **dadurch gekennzeichnet, daß** mindestens ein Oxid, ausgewählt aus der Gruppe von MgO, NiO, CuO, MnO₂ und WO₃, im Bereich von nicht weniger als 0,1 Gew.-Teil und nicht mehr als 10 Gew.-Teilen zugesetzt wird.

11. Mehrschichtige Hochfrequenzvorrichtung nach Anspruch 10, wobei die Dielektrizitätskonstante (εᵣ) im Bereich von 10 bis 50 liegt.

## Revendications

1. Composition céramique diélectrique, dans laquelle le premier composant comprenant de l'oxyde de calcium, de l'oxyde de magnésium, de l'oxyde de niobium et de l'oxyde de titane et exprimé par la formule Ca{(Mg_{1/3}Nb_{2/3})₁₋ₓTiₓ}O₃ (dans laquelle x est supérieur à 0 mais non supérieur à 0,50) est présent dans une gamme de pas moins de 40 parties en poids et pas plus de 98 % en poids ; le second composant comprenant au moins un composé parmi SiO₂ et B₂O₃ est présent dans une gamme de pas moins de 2 parties en poids et pas plus de 60 % en poids ; et est **caractérisée en ce qu'**au moins un oxyde choisi dans le groupe constitué par MgO, NiO, CuO, MnO₂ et WO₃ est ajouté dans une gamme de pas moins de 0,1 partie en poids et pas plus de 10 % en poids.

2. Composition céramique diélectrique selon la revendication 1, dans laquelle la constante diélectrique (εᵣ) s'échelonne de 10 à 50.

3. Composition céramique diélectrique selon la revendication 1, dans laquelle le produit Qf est non inférieur à 1 000 GHz et non supérieur à 30 000 GHz.

4. Procédé de fabrication de la composition céramique diélectrique comprenant : le premier composant comprenant de l'oxyde de calcium, de l'oxyde de magnésium, de l'oxyde de niobium et de l'oxyde de titane et exprimé par la formule Ca{(Mg_{1/3}Nb_{2/3})₁₋ₓTiₓ}O₃ (dans laquelle x est supérieur à 0 mais non supérieur à 0,50) dans une gamme de pas moins de 40 parties en poids et pas plus de 98 % en poids ; le second composant comprenant au moins un composé parmi SiO₂ et B₂O₃ dans une gamme de pas moins de 2 parties en poids et pas plus de 60 % en poids ; et est **caractérisée en ce qu'**au moins un oxyde choisi dans le groupe constitué par MgO, NiO, CuO, MnO₂ et WO₃ est ajouté dans une gamme de pas moins de 0,1 partie en poids et pas plus de 10 % en poids ; et ledit procédé comprend le frittage de ladite composition et un traitement de préchauffage d'un mélange d'au moins un composé choisi parmi le second composant et un additif avant ledit procédé de frittage.

5. Procédé de fabrication de la composition céramique diélectrique selon la revendication 4, dans lequel la température du traitement de préchauffage s'échelonne de 500°C à 900°C.

6. Procédé de fabrication de la composition céramique diélectrique selon la revendication 4, dans lequel la température de fusion du traitement de préchauffage est de 1 000°C à 1 200°C ; et ledit traitement thermique comprend une trempe après la fusion.

7. Procédé de fabrication de la composition céramique diélectrique selon la revendication 4, dans lequel la température de frittage s'échelonne de 800°C à 1 200°C.

8. Procédé de fabrication de la composition céramique diélectrique selon la revendication 4, dans lequel le premier composant est calciné à une température de 1 000°C à 1 300°C et ensuite finement broyé.

9. Procédé de fabrication de la composition céramique diélectrique selon la revendication 4, dans lequel le traitement de préchauffage comprend les étapes de fusion du second composant à une température de 1 000°C à 1 200°C, la trempe de celui-ci et le broyage fin de celui-ci.

10. Dispositif multicouche à haute fréquence comprenant un conducteur et un diélectrique, dans lequel le conducteur comprend du Cu, un alliage de Cu, Au, un alliage de Au, Ag et un alliage de Ag ; toute ou partie de la couche diélectrique comprend : le premier composant comprenant de l'oxyde de calcium, de l'oxyde de magnésium, de l'oxyde de niobium et de l'oxyde de titane et exprimé par la formule Ca{(Mg_{1/3}Nb_{2/3})₁₋ₓTiₓ}O₃ (dans laquelle x est supérieur à 0 mais non supérieur à 0,50) dans une gamme de pas moins de 40 parties en poids et pas plus de 98 % en poids ; le second composant comprenant au moins un composé parmi SiO₂ et B₂O₃ dans une gamme de pas moins de 2 parties en poids et pas plus de 60 % en poids ; et est **caractérisée en ce qu'**au moins un oxyde choisi dans le groupe constitué par MgO, NiO, CuO, MnO₂ et WO₃ est ajouté dans une gamme de pas moins de 0,1 partie en poids et pas plus de 10 % en poids.

11. Dispositif multicouche à haute fréquence selon la revendication 10, dans lequel la constante diélectrique (εᵣ) s'échelonne de 10 à 50.
